# EUROPEAN PATENT SPECIFICATION

(11) **EP 0 463 696 B1**
(45) Date of publication and mention of the grant of the patent: **17.01.1996**
(21) Application number: 91201573.2
(22) Date of filing: 19.06.1991
(51) Int. Cl.: C12G 3/04

(54) **Sour dairy liqueur**
Likör auf Basis von Sauermilchprodukten
Liqueur lactée acide

(30) Priority: 22.06.1990 NL 9001438
(43) Date of publication of application: 02.01.1992
(73) Proprietor: CAMPINA MELKUNIE B.V., NL-5301 LB Zaltbommel (NL)
(72) Inventor: Bevers, Johannes Adrianus Maria, NL-5401 BP Uden (NL); Schaminee, Theodorus Petrus Catharinus, NL-5821 CC Vierlingsbeek (NL); van den Hoven, Martinus Marinus Gerardus Maria, NL-5467 ED Veghel (NL)
(74) Representative: Smulders, Theodorus A.H.J., Ir.

(56) References cited:
- EP-A- 0 177 077
- DE-A- 3 043 648
- GB-A- 2 087 212
- GB-A- 2 162 039
- PATENT ABSTRACTS OF JAPAN, vol. 10, no. 136 (C-347) (2193), May 20, 1986

## Description

This invention relates to sour alcoholic beverages based on a mixture of vegetable juices or extracts and milk products. Such beverages are known from European patent specification 0 177 077, disclosing that stable products with good keeping characteristics can be obtained by souring skim milk or whole milk, mixing with fruit juice, sugar, thickeners, stabilizers, and similar conventional ingredients, homogenizing the mixture and lowering the bacterial content through thermal treatment, in such a way that the product becomes microbiologically stable, and subsequently admixing alcohol and adjusting the product to the desired pH. In that way excellent non-perishable yoghurt liqueurs with an alcohol content of from 1 to approximately 12 percent by volume can be prepared, which remain stable if conventional stabilizers such as pectin or carboxymethylcellulose (CMC) are used therein. In principle, the stability referred co can also be obtained by lowering the pH, for instance by adding an organic acid or by utilizing sour fruit juices, such as lemon juice or coffee extract.

It has been found, however, that when a fruit juice of too high an acidity content is used, a stabilizer of the conventional type, such as the above-mentioned pectins or CMC, is not always adequate for preparing a sour dairy liqueur whose pH is lower than 5.0. It has been found in particular that when the pH is adjusted below the iso-electric point of the milk proteins, i.e. below pH 4.5, such liqueurs that have been stabilized with pectin exhibit a tendency to separate a whey-like layer, to gelate undesirably and to form a protein flock, which renders the beverage obtained unusable. Neither carboxymethylcellulose nor the other conventional stabilizers help to prevent this defect. Thus, e.g., liqueurs with sour juices from pineapples, cherries, various cypes of berries and also alcoholic extracts of those fruits cannot be properly stabilized with pectin.

This holds in particular when the beverage has a high alcohol content in addition to a low pH.

It has now been found that this lack of sufficient stabilization by pectin or carboxymethylcellulose can be remedied by utilizing a polyol ester of alginic acid as the only stabilizer for a liqueur or similar alcohol-containing beverage of pH ≤ 5.0, more particularly of pH < 4.5. In particular, a propylene glycol alginate can be used for this purpose. Propylene glycol alginates of various compositions and viscosities can be used. By the selection of the stabilizer, the organoleptic characteristics of the liqueur can be influenced.

It is noted that it is known per se from European patent publication 0 292 034 to use propylene glycol alginates as thickeners in an alcohol-containing foamable product that contains fat and protein. The stability of such a foam is of an entirely different nature than that of an alcoholic beverage as in the present invention. Thus, a foamable product should remain a firm, form-retaining mass after foaming and, after being sprayed on a dessert, maintain an acceptable appearance as a gel until the time of consumption. It will be clear that a beverage according to the invention should not gelate or exhibit a gelated or firm appearance after whipping, but should be fluid, without exhibiting a phase reversal of the emulsion as in whipped cream.

The polyphosphates or lactates which are used in the foamable products according to EP 0 292 034, together with the propylene glycol alginates optionally used, yield an entirely different and undesirable behaviour in products that contain alcohol, protein, and fat, such as the beverages according to the invention.

It is further noted that from "Patent Abstracts of Japan", vol 10. no. 136 it is known to prepare a sour beverage based on an oil/water emulsion, which contains alginic acid propylene glyccl ester, together with a sucrose ester and/or a glycerol fatty acid ester. In that beverage, however, the stabilizing effect is obtained by the sucrose ester and/or the glycerol fatty acid ester (cfr. Japanese patent publication 84041709), so that the alginic acid ester is present as an additional thickening agent.

GB-A-2 087 212 describes a process for stabilizing fruit juice or vegetable juice containing products. This process requires an effective amount of a low-viscosity alginate and sodium carboxymethyl cellulose. It is explicitly mentioned that the individual constituents of the stabilizing combination do not have the stabilizing effect in the fruit or vegetable juice compositions.

DE-A-3 043 648 teaches an intermediate product based on eggs which may contain propylene glycol alinate. The alginate used does however not have a stabilizing effect, because a precipitate of 45-50 Brix is required in the egg product.

Surprisingly, it has now been found that the use of propylene glycol alginates without lactates, polyphosphates and similar additives leads to an entirely different effect in the beverages according to the invention, particularly to an eminent and stable fluidity which is maintained even after prolonged storage.

It is not known why in some cases pectin can yield a stable liqueur at a pH below 4.5, but leads to gelation and other deviations in pineapple juice, various types of currant juice, cherry juice, apple juice, lemon juice and the like. Perhaps, those juices contain substances which bind to the milk proteins or ions that affect the bond between pectin and milk protein; perhaps, an enzymatic effect on protein or pectin could play a role.

It is remarkable that propylene glycol alginate, the very stabilizer that works so satisfactorily in beverages according to the invention at a pH below 4.5, works much less satisfactorily at pH values above the iso-electric point than does pectin, for instance.

The invention will be further explained in and by the following Examples.

### Example 1

A yoghurt base was prepared by dissolving 5.2 kg propylene glycol alginate mixed with 53 kg sugar in 928 kg low-fat yoghurt. This yoghurt base was subsequently pasteurized and cooled. To 512 kg of this yoghurt base, a mixture was added consisting of:
1. 227 kg of a cherry liqueur containing natural cherry juice, 43.7% sugar and 24.7% alcohol.
2. 230.3 kg molasses 67% Brix.
3. 76.2 g alcohol 96%.
4. 42.1 kg water.

The total product was then pasteurized and subjected to two-step homogenization at 250/50 atmospheric pressure and then cooled to ambient temperature.

This final product exhibited a stability that is amply sufficient in practice, namely of approx. 6 months at room temperature storage, without visible quality defects. The above experiment was repeated with an analogous amount of pectin instead of propylene glycol alginate. The so-prepared final product did not have the desired physical keeping characteristics and, after only a short time, exhibited unacceptable destabilization phenomena, particularly flocculation and gelation.

### Example 2

A neutral emulsion was prepared based on commercially available "cream of coconut" and milk ingredients, as follows:

To 500 kg cream of coconut were added 173.7 kg ultrafiltrated milk protein concentrate, 589 kg molasses 67% Brix and 1,531 kg water. This mixture was then pasteurized and subjected to two-step homogenization at 250/50 atmospheric pressure. Then 59 kg of pineapple concentrate 55% Brix was added to 102 kg of this emulsion. The pH was thereby lowered to 4.0.

Then 12.8 kg sugar, 5.2 kg propylene glycol alginate and 120 kg water were added to 86.1 kg of the soured emulsion. This product was then heated, subjected to two-step homogenization at 250/50 atmospheric pressure and cooled. Finally, to 71.8 kg of the so-prepared stabilized sour emulsion, a mixture was added consisting of 12.6 kg alcohol 96%, 10.3 kg water and 3.5 kg sugar.

Packaged in bottles, this beverage proved not to exhibit any destabilization phenomena for 6 months, whether stored in the refrigerator or at room temperature. Comparable charges of the product in which no propylene glycol alginate but an equivalent amount of pectin or CMC was used exhibited visual defects, such as gelation, flocculation and separation of an aqueous layer, shortly after preparation.

## Claims

1. An alcoholic beverage based on a mixture of vegetable juices or extracts and milk products, having a pH lower than 5.0, characterized in that as the only stabilizing agent a polyol ester of alginic acid is present.

2. An alcoholic beverage according to claim 1, characterized in that as a polyol ester of alginic acid, propylene glycol alginate is used.

3. An alcoholic beverage according to any one of the preceding claims, characterized in that from 0.1 to 1.2% by weight of the polyol ester of alginic acid is used.

4. An alcoholic drink according to any one of the preceding claims, characterized in that a fruit juice or an alcoholic extract from red or black currants, cranberries, cherries, apples, citrus fruits or pineapple is used as an ingredient.

## Patentansprüche

1. Alkoholisches Getränk auf Basis eines Gemisches aus pflanzlichen Säften oder Extrakten und Milchprodukten mit einem pH-Wert unter 5,0, dadurch gekennzeichnet, daß als einziges Stabilisierungsmittel ein Polyolester der Alginsäure anwesend ist.

2. Alkoholisches Getränk nach Anspruch 1, dadurch gekennzeichnet, daß als Polyolester der Alginsäure Propylenglykolalginat verwendet wird.

3. Alkoholisches Getränk nach einem der vorhergehenden Ansprüche, dadurch gekennzeichnet, daß zwischen 0,1 und 1,2 Gewichtsprozent des Polyolesters der Alginsäure verwendet wird.

4. Alkoholisches Getränk nach einem der vorhergehenden Ansprüche, dadurch gekennzeichnet, daß ein Fruchtsaft oder ein alkoholischer Extrakt aus roten oder schwarzen Johannisbeeren, Moosbeeren, Kirschen, Äpfeln, Zitrusfrüchten oder Ananas als Zutat verwendet wird.

## Revendications

1. Boisson alcoolique à base d'un mélange de jus ou d'extraits de végétaux et de produits laitiers, possédant un pH inférieur à 5,0, caractérisée en ce que le seul agent stabilisateur présent est un ester de polyol d'acide alginique.

2. Boisson alcoolique selon la revendication 1, caractérisée en ce que l'ester de polyol d'acide alginique utilisé est l'alginate de propylèneglycol.

3. Boisson alcoolique selon l'une quelconque des revendications précédentes, caractérisée en ce que 0,1 à 1,2 % en poids de l'ester de polyol d'acide alginique est utilisé.

4. Boisson alcoolique selon l'une quelconque des revendications précédentes, caractérisée en ce qu'un jus de fruit ou un extrait alcoolique de groseille, de cassis, de canneberge, de cerise, de pomme, d'agrumes ou d'ananas est utilisé comme ingrédient.
